# EUROPÄISCHE PATENTSCHRIFT

(11) **EP 0 620 072 B1**
(45) Veröffentlichungstag und Bekanntmachung des Hinweises auf die Patenterteilung: **29.12.1999**
(21) Anmeldenummer: 94103074.4
(22) Anmeldetag: 02.03.1994
(51) Int. Cl.: B23D 19/08, B21D 43/09

(54) **Vorrichtung und Verfahren zur Dünnblechbearbeitung**
Method and apparatus for machining thin metal sheets
Méthode et dispositif pour l'usinage de tôles minces

(30) Priorität: 15.03.1993 CH 76993; 14.01.1994 CH 11994
(43) Veröffentlichungstag der Anmeldung: 19.10.1994
(73) Patentinhaber: MABI AG, CH-5200 Windisch (CH)
(72) Erfinder: Biland, Max, CH-5200 Windisch (CH)
(74) Vertreter: Groner, Manfred

(56) Entgegenhaltungen:
- EP-A- 0 116 415
- EP-A- 0 123 183
- EP-A- 0 147 816
- EP-A- 0 188 648
- EP-A- 0 276 027
- EP-A- 0 362 019
- EP-A- 0 512 188
- DE-A- 3 626 964
- DE-A- 4 029 866
- DE-U- 9 209 160
- FR-A- 2 124 862
- GB-A- 2 175 828
- US-A- 3 499 355

## Beschreibung

Die Erfindung betrifft eine Vorrichtung und ein Verfahren zur Dünnblech-Bearbeitung gemäss der Oberbegriffe der Ansprüche 1 und 20.

Solche Vorrichtungen für das Formschneiden haben sich als besondere Gattung für das Zuschneiden von dünnen Blechformen, wie sie zum Beispiel für die Herstellung von Isolierverschalungen mit den verschiedensten Raumformen benötigt werden, herausgebildet. Die Isolierverschalungen an sich, aber noch viel mehr die einzelnen Zuschnitte für den Aufbau von Bögen, Kalotten, Stutzen, Konusformen usw. weisen eine enorme Formenvielfalt auf, die aber geometrisch doch relativ genau bestimmbar sind, weshalb über einen programmgesteuerten Schneidkopf der Zuschnitt exakt und sehr schnell herstellbar ist. Die Programmsteuerung kontrolliert und koordiniert alle wesentlichen Arbeitsbewegungen.

Das charakteristische an solchen Blechschneidmaschinen liegt darin, dass sie als Arbeitstisch gestaltet sind. Die Tisch-Auflageebene ist bei einer bekannten Vorrichtung in Richtung des Blechtransportes in zwei voneinander distanzierte Teile unterteilt. Dazwischen bewegt sich der Schneidkopf. Am Ende des ersten Teils befindet sich ein zur Vorschubrichtung quer orientiertes Vorschubwalzenpaar, das eine ganze Blechplatte in Vorschubrichtung gegen den hinteren Teil der Auflageebene bewegt und die Blechplatte in den gesteuerten Schneidkopf hineindrückt. Am Anfang des zweiten Teils der Tischfläche ist ein zweites Vorschubwalzepaar in Form eines Zugwalzenpaares vorhanden, das das voranlaufende Ende der Blechplatte ergreift und mit der durch das erste Vorschubwalzenpaar vorgegebenen Vorschubgeschwindigkeit zieht und den Vorschub allein aufrecht erhält, wenn das nachlaufende Ende das erste Vorschubwalzenpaar verlässt. Messer und Gegenmesser des Schneidkopfes bilden zwei freilaufende Kreismesser. Die aktive Schneidkraft wird primär von den Walzen aufgebracht.

Bei einer anderen bekannten Ausführungsform von der Anmelderin wird dieser Nachteil durch das Weglassen der Vorschubwalzenpaare erreicht. Der Vorschub wird durch eine längsverschiebbare Transporteinrichtung bewirkt, an der die Blechplatte für den Schneidvorgang zum Beispiel mit Magnetklemmung befestigt wird. Um ein Verwerfen der Blechplatte während des Schneidvorganges zu vermeiden, ist der Schneidkopf mit Stanzschnittmessern ausgerüstet, was aber eine vergleichsweise grosse Lärmentwicklung während des Schneidens der Blechplatte bewirkt.

Die Nachteile dieser beiden bekannten Lösungen konnten von dem Erfinder selbst dadurch behoben werden, dass die Schneidwerkzeuge als zwei angetriebene Kreismesser ausgebildet werden. Die Blechtransporteinrichtung kann dabei als blosse Blechführungseinrichtung mit nur minimaler Vorschubkraft ausgebildet werden. Es wurde erkannt, dass der Gesamtschwerpunkt des Schneidkopfes einschliesslich der Einzelantriebe, mindestens näherungsweise auf der Schwenk- beziehungsweise Drehachse des Schneidkopfes und der Schneidstelle liegen soll. Hierzu wird vollumfänglich auf den Anmeldetext des Schweizer Gesuches Nr. 3260/92-7 Bezug genommen. Damit können geräuscharm und mit bisher nicht erreichten kurzen Zeiten selbst komplizierte Blech-Formen mit hoher Genauigkeit hergestellt werden.

Der eigentliche prinzipielle Nachteil aller bisherigen Ausgestaltungen von Dünnblech-Schneidmaschinen liegt anerkanntermassen darin, dass mit ihnen nur Aussenkonturen, jedoch keine Innenkonturen herstellbar sind. Dies war insofern nicht sehr nachteilig als die Mehrheit der anfallenden Arbeiten bei der Herstellung von Zuschnitten für den Aufbau von Bogen, Kalotten, Stutzen, Konusformen usw. nur eine Schneidbearbeitung der äusseren Umrissform erfordert. Nietlöcher und dergleichen, ebenso grosse Ausnehmungen für Rohrdurchbrüche usw. müssen so oder so an anderen Bearbeitungsmaschinen wie Bohr- und Stanzeinrichtungen erzeugt werden. Die Ausarbeitung von Innenkonturen aus Blechen ist demgegenüber heute die eigentliche Stärke der Laserschneidtechnik. Für diese ist es nicht von Belang wo der Schnitt beginnt. Der schwerwiegende Nachteil der Laserschneidtechnik liegt aber darin, dass die entsprechenden Maschinen extrem teuer sind und nur von Grossfirmen oder von Betrieben, die darauf spezialisiert sind, angeschafft werden können. Für Kleinbetriebe sind Laserschneidmaschinen wegen der sehr schlechten Auslastung beziehungsweise den daraus resultierenden Amortisationsbelastungen für Einzelstücke nicht tragbar. Bei Dünnblechen sind zudem die vom Laserstrahl erzeugten Schneidkanten unsauber.

Die DE-A- 36 26 964 zeigt eine Kreisschere, bei der das Werkstück von einer Werkstückhalterung undrehbar festgelegt wird. Messer umrunden die Werkstückhalterung und Schneiden aus einem Blech Ronden aus. Die DE-U- 92 09 160.1 offenbart eine Trennanlage, bei der mittels einer Blechschere jeweils aus Rand eine Werkstückes Teile heransgeschnitten werden.

Dem Erfinder schwebte nun der Wunsch vor, eine preisgünstige Dünnblech-Bearbeitung mit den Arbeitsmöglichkeiten der Laser-Blechschneidtechnik zu realisieren. Der Erfinder stellte sich deshalb die Aufgabe eine programmierbare und kostengünstige Dünnblech-Bearbeitungstechnik für beliebige Innen- und Aussenformen als Gegenstück zu der Laser-Schneidtechnik zu entwickeln.

Erfindungsgemäss wird diese Aufgabe gelöst durch die kennzeichnenden Merkmale der Ansprüche 1 und 20.

Die vertikale Verstellung beziehungsweise das gesteuerte Zueinanderführen der genannten Werkzeuge sowie die entsprechende Verfahrbarkeit an übereinander angeordneten Führungen erlaubt den Arbeitsbeginn irgendwo, von aussen, oder mitten in der Fläche eines dünnen Bleches. Die Werkzeugteile werden in ausgerücktem Zustand über Rechnermittel genau in die Arbeits-Position gefahren, an die Stelle, bei der die Bearbeitung beginnen soll. Die Bearbeitungswerkzeuge werden motorisch angetrieben und danach rücken die Werkzeuge zueinander und die Schneidarbeit beginnt, zum Beispiel für die Herstellung eines Kreisausschnittes. Ein entscheidender Vorteil für die oekonomische formenherstellung ist die optimale Ausnutzung einer Blechtafel, beziehungsweise die Produktion des kleinst möglichen Verschnittes. Damit ist es aber erstmals möglich geworden, in der klassischen Dünnblech-Schneidtechnik gleichsam die bei der Laserschneidtechnik bekannte Optimierung der Blechtafeleinteilung für die Herstellung von bestimmten gegebenen Formen, anzuwenden. Es können nun entsprechende Optimierungsprogramme ausgearbeitet werden. Auch anfängliche Befürchtungen, die neue Dünnblech-Bearbeitungseinheit könnte zu schwer und zu teuer werden liessen sich durch die Merkmale des Anspruches 3 beseitigen.

Die Erfindung gestattet eine ganze Anzahl weiterer besonders vorteilhafter Ausgestaltungen. Es wird vorgeschlagen, die horizontalen Führungen als Führungswangen auszubilden, so dass diese den Portalrahmen versteifen. Mit dem Portalrahmen bekommt die Bearbeitungsmachine eine ähnlich platzsparende Gestalt, wie sie von verstellbaren Bilderwänden bekannt ist. An beiden Führungen ist je ein Schlitten verfahrbar, wobei für eine mittlere Blechdurchführöffnung die Führungen im Abstand übereinander angeordnet sind und die Schlitten je ein Werkzeugteil tragen. Für die horizontale koordinierte Verfahrbarkeit werden zum Beispiel hydraulische oder pneumatische und/oder mechanische und/oder elektrische Mittel verwendet. Werkzeugteil und Schlitten sind als eine eigenständige Baugruppe an je einer äusseren und inneren Führungsschiene der Führungswangen geführt. Bevorzugt weisen die Verstellmittel einen, über einen Exzenter verstellbaren Verschwenkhebel auf und verschieben die Schneidwerkzeuge in der Schneideebene derart, dass sie sich vertikal ganz besonders in einer entsprechend den Schneidmessern leicht zur Vertikalen geneigten Ebene voneinander distanzieren. Die Verstellmittel werden sowohl mit motorischen Mitteln, zum Beispiel als steuerbare Luftdrehzylinder, wie auch mit Handverstellmitteln und mit einer Abstandsanzeige der Schneidwerkzeuge ausgerüstet.

Eine besonders vorteilhafte Ausgestaltung liegt darin, dass eine weitere, zusätzliche Dünnblech-Bearbeitungseinheit mit den Bearbeitungsköpfen verbunden wird, welche ein Feinstanzwerkzeug sein kann. Es sind Rechnermittel für die Steuerung aller Bewegungen vorgesehen, so dass zum Beispiel sinnvoll kombiniert, aus dem Blech Formen geschnitten und erforderliche Nietlöcher in den Formen hergestellt werden. Diese Vorrichtungskombination ergibt eine unerwartete Erleichterung. Da der obere und der untere Teil des Feinstanzwerkzeuges starr je mit den Schlitten der Werkzeugteile verbunden ist, und die Schneidwerkzeuge mit hoher Präzision ebenfalls über entsprechende Programme und Steuermittel führbar sind, ist die genaue Lage der beiden Werkzeuge gleichwerweise definiert, so dass zum Beispiel die erwähnten Nietlöcher ohne Neueinrichtung mit dem selben Programm genau ausgestanzt werden können. Der Arbeitseingriff des zweiten Werkzeuges orientiert sich gleichsam an den beliebigen Konturen des ersten oder umgekehrt, so dass eine bisherige Fehlerquelle durch das zwei oder dreimalige Neueinrichten nun ohne Zeitaufwand völlig ausgeschaltet wird.

Anstatt eines bisherigen Arbeitstisches mit vier Beinen kann gemäss Anspruch 9 der vertikale Portalrahmen 50 gestaltet werden, dass die Arbeitswerkzeuge für Einstell- und Unterhaltsarbeiten von vorne und hinten freier zugänglich sind, wohingegen bis anhin die Bedienungs-Person dafür unter den Tisch kriechen musste. Zweckmässig ist eine Verbindung des Portalrahmens mit den Merkmalen des Anspruches 10.

In der Folge wird nun die Erfindung mit weiteren Einzelheiten erläutert. Es zeigen:
- die Figur 1: eine vereinfachte Ansicht der Vorrichtung in Perspektive;
- die Figur 2: Werkzeugoberteil und Werkzeugunterteil in grösserem Massstab in Seitenansicht;
- die Figur 3: die beiden Schneidköpfe auseinandergerückt;
- die Figur 4: die Figur 3, die Schneidköpfe jedoch in Arbeitseingriff;
- die Figur 5: entsprechend der Figur 4 die beiden Schneidköpfe in grösserem Massstab;
- die Fig. 6: eine gleiche Darstellung wie Fig. 2 einer Variante der Schmiedwerkzeuge in ausgerückter Stellung;
- die Fig. 7: einen Ausschnitt aus Fig. 6 in vergrösserter Darstellung teilweise geschnitten, wobei sich die Schneidwerkzeuge in einer Zwischenstellung befinden;
- die Fig. 8: eine gleiche Darstellung wie Fig. 7, wobei die Schneidwerkzeuge in Arbeitsstellung sind;
- die Fig. 9: das Detail 9 aus Fig. 6 in vergrösserter Darstellung;
- die Fig.10: ein zweites Ausführungsbeispiel einer Blechtransporteinrichtung in Ansicht;
- die Fig.11: eine Draufsicht auf Fig. 10;
- die Figur 12: zur Illustration ein Beispiel für ein fertig erstelltes Bogenstück;
- die Figur 13: verschiedene Blechformen in optimierter Lage, die aus einer Blechtafel ausgeschnitten werden.

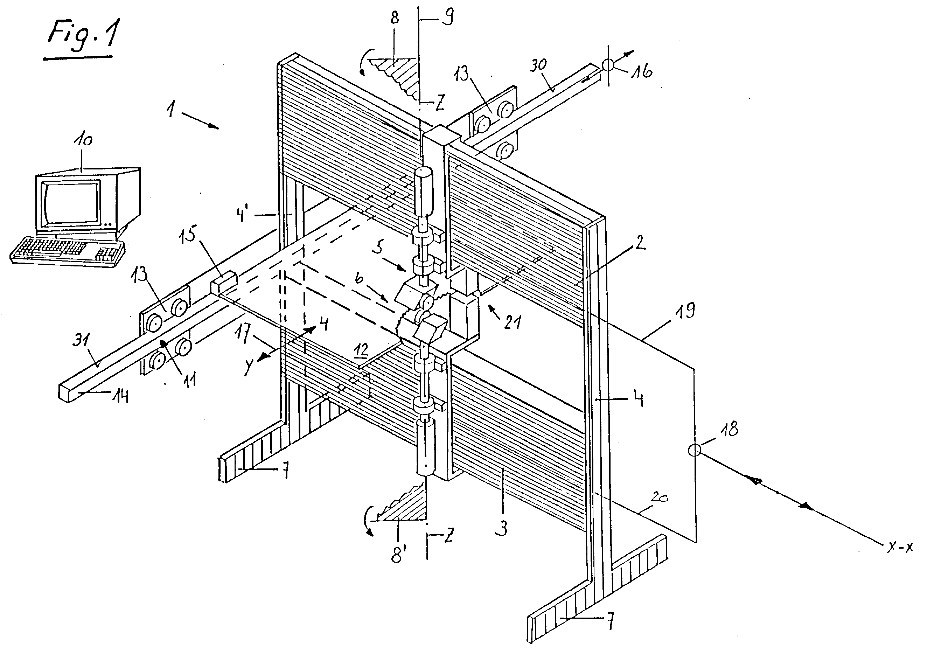

In der Folge wird nun auf die Figur 1 Bezug genommen. Ein Portalrahmen 1 ist (mit horizontaler Schraffur) durch eine obere Führungswange 2 sowie eine untere Führungswange 3, und beidseits je eine Stütze 4, resp. 4' (mit vertikaler Schraffur) gebildet. An der oberen Führungswange 2 ist ein Werkzeugoberteil 5 und an der unteren Führungswange 3 ein Werkzeugunterteil 6 in horizontaler Richtung, gradlinig verfahrbar. Die Stützen 4, 4' sind über dem Fussboden je durch beidseits vorstehende Schenkel 7 resp. 7' abgestützt. Neben der horizontalen Verfahrbarkeit sind die beiden Werkzeugteile 5 und 6 beide mit einem Verdrehantrieb ausgerüstet, welche mit einer Fahne 8 resp 8' an der vertikalen (der Z-Achse entsprechenden) Achse 9 angedeutet ist. Der Antrieb kann irgend eine bekannte Ausführung zum Beispiel gemäss der Schweizer Gesuches Nr. 3260/92-7 sein. Als eigentliches Hirn ist ein PC 10 zugeordnet, in dem alle notwendigen Formenprogramme gespeichert sind. Der PC 10 gibt auch die erforderlichen Steuersignale ab.

Ein weiterer wichtiger Bestandteil ist eine Blechtransporteinrichtung 11 für eine Blechtafel 12, die mehr schematisch durch beidseits am Portalrahmen 1 befestigte Rollenführungen 13 sowie einer Transportschine 14 angedeutet ist. Das Blech wird durch Magnete 15 auf der Transportschiene 14 festgeklemmt, welche über einen motorischen Antrieb 16, in hoher Präzision entsprechend Pfeil 17, je nach Steuerbefehl die Blechtafel 12 in Richtung der V-Achse vorwärts oder rückwärts bewegt. Rein schematisch ist ferner ein Antrieb 18 eingezeichnet, wobei mit der Linie 19 und 20 die Kopplung der des Antriebes für das horizontale Verfahren des Werkzeugoberteiles 5 sowie des Werkzeugunterteiles 6 in Richtung der X-Achse angegeben ist. Eine zusätzliche Dünnblech-Bearbeitungseinheit ist mit 21 bezeichnet.

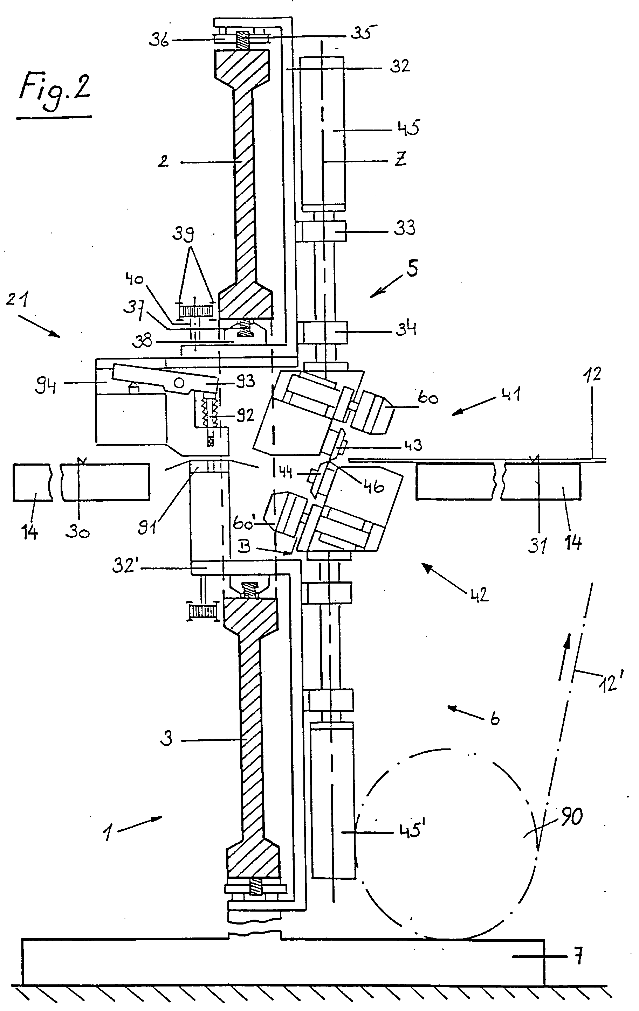

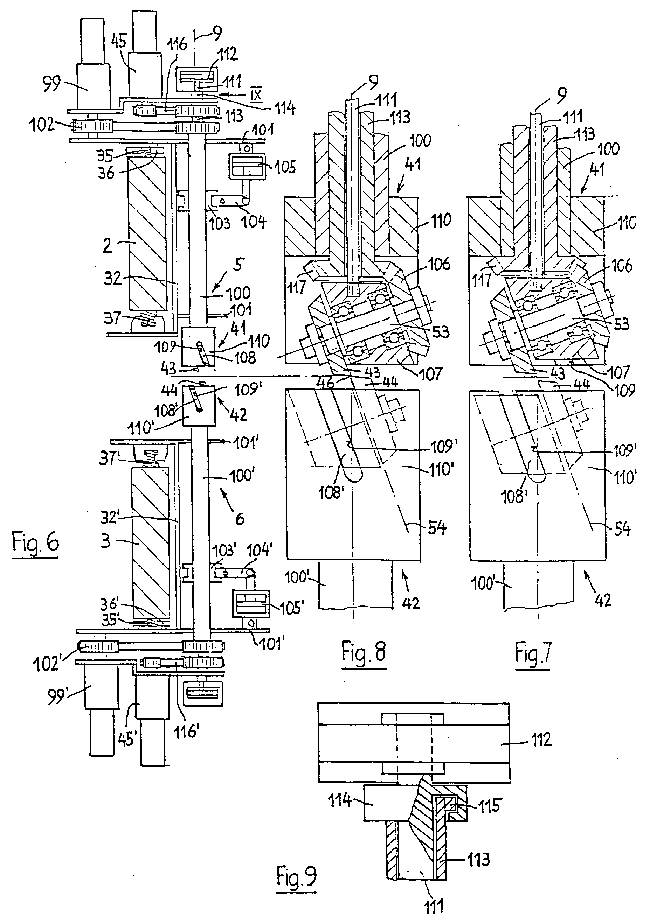

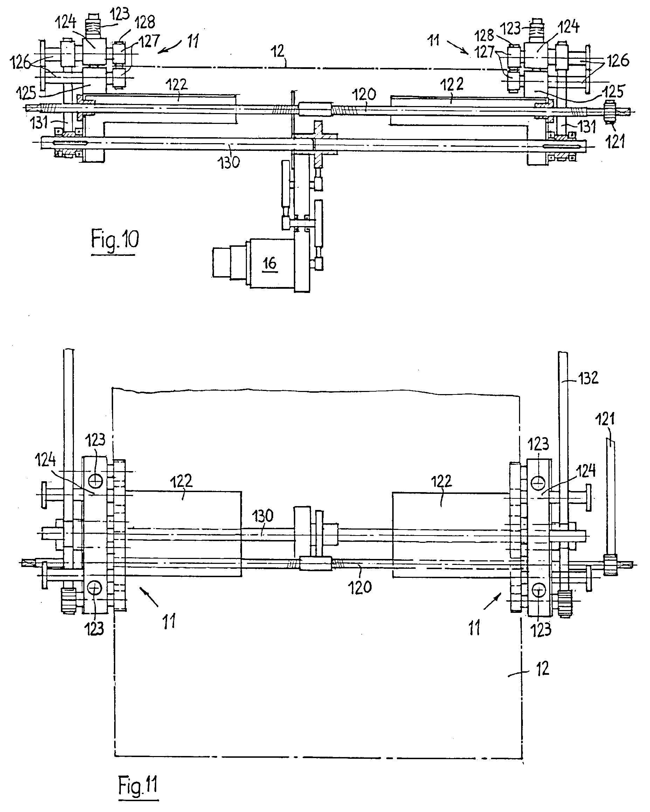

In der Figur 2 sind das Werkzeugoberteil 5 und das Werkzeugunterteil 6 sowie die Dünnblech-Bearbeitungseinheit 21 in einer Seitenansicht in grösserem Massstab und der Portalrahmen 1 im Schnitt dargestellt. Zur Verbesserung der Übersichtlichkeit wurde in der Figur 1 eine hintere Blechauflagefläche 30 sowie eine vordere Blechauflagefläche 31 weggelassen. Beide sind in der Figur 2 schematisch eingezeichnet, und sind in Wirklichkeit fest mit den Stützen 4 resp. 4' verbunden. Das Werkzeugoberteil 5 ist zu dem Werkzeugunterteil 6 gegengleich angeordnet, im übrigen können beide völlig identisch ausgebildet sein, weshalb nur das Werkzeugoberteil 5 mit weiteren Einzelheiten erläutert wird. Das Werkzeugoberteil 5 ist mittels Lagern 33 und 34 an einem Schlitten 32 verankert. Der Schlitten 32 ist oben an einem Führungsprofil 35 beidseits durch zwei Rollen 36 und unten an einer Gleitschiene 37 über einen Gleitfuss 38 geführt. Ein Kettenvor- und rücklauf 39 treibt ein Kettenrad 40 für das horizontale Verfahren des Schlittens 32 an. Das Werkzeugober- beziehungsweise Werkzeugunterteil 5 beziehungsweise 6 weisen je einen Schneidkopf 41 beziehungsweise 42 auf. Die zwei Schneidköpfe 41 und 42 sind in der Figur 5 in noch grösserem Massstab dargestellt. Deren rotierende Schneidmesser 43 resp. 44 werden durch einen Antriebsmotor 45 beziehungsweise 45' angetrieben. Wesentlich ist nun, dass beide Antriebe 45 und 45' eine gemeinsame Drehachse 9 haben, welche bevorzugt durch die Schneidstelle, mit 46 bezeichnet, verläuft. Beide Schneidmesser 43, 44 sind in der Form von Kreismessern ausgebildet und werden über zwei, bezüglich der Achse 9 gegengleiche Winkelgetriebe 47 resp. 48 angetrieben, welche je ein Kegelradpaar 49/50 sowie ein Stirnradpaar 51/52 aufweisen. Entsprechend der optimalen Neigung der Schneidmesser 43/44 liegen beide, von dem Stirnrad 52 angetriebenen Messerwellen 53 parallel und weisen gleich geneigte Achsen auf. Durch die gegengleiche Anordnung der beiden Antriebsmotoren 45, 45' und ihren jeweiligen Winkelgetrieben 47 resp. 48 sowie durch ihren identischen konstruktiven Aufbau, fällt ihr gemeinsamer Schwerpunkt mit der Schneidstelle 46 sowie der Drehachse 9 zusammen. Dadurch entstehen bei eingeschalteten Antrieben 45/45' und sehr rascher Drehbewegung beider Schneidköpfe 41/42 durch die Kreiselkräfte der Messerwellen 53 keine Taumelbewegungen.

Die parallelen Messerwellen 53 sind zur Horizontalen geneigt. Entsprechend geneigt sind die rotierenden Schneidmesser 43, 44, deren einander zugewandte koplanare Seiten in der Schneidebene 54 (Figur 5) liegen.

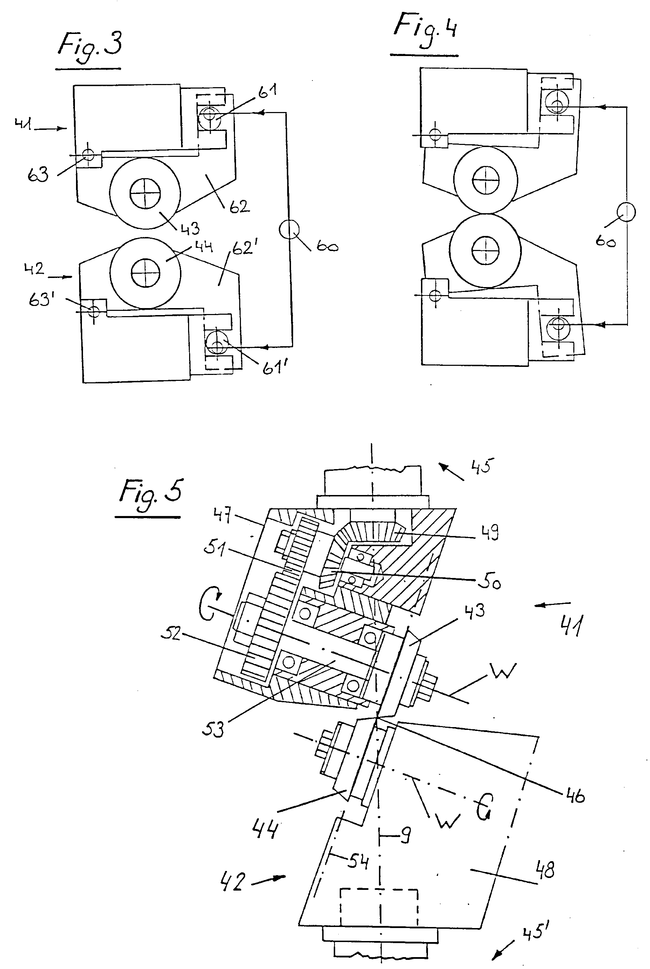

Über Luftdrehzylinder 60 (Figur 2) können die Schneidmesser 43 resp. 44 in der Schneidebene 54 in eine ausgerückte Verfahrstellung wie in der Figur 3 dargestellt ist, oder in eine Arbeitseingriffstellung wie in der Figur 4 dargestellt ist, gebracht werden. Über den Luftdrehzylinder 60 resp. 60' wird je ein Exzenter 61 resp. 61' verdreht, welche am oberen Schneidkopf 41 resp. am unteren Schneidkopf 42 verankert sind und bewirken durch einen Messerarm 62 resp. 62' um eine Achse 63 resp. 63' eine Verschwenkbewegung. Dadurch können wahlweise die beiden Stellungen eingestellt und dabei die Schneidmesser 43, 44 in der Schneidebene 54 von- und zueinander bzw. in der Senkrechten voneinander distanziert werden. Mit Kreis 90 ist angedeutet, dass nun auch eine Dünnblech-Bearbeitung ab Rolle 90 möglich ist.

Die Schneidköpfe 41, 42 können auch anders ausgebildet sein, wie dies nachfolgend anhand der Fig. 6 bis 9 gezeigt wird. Gleiche Teile wie beim ersten Beispiel sind mit den gleichen Hinweisziffern versehen. Insoweit wird auf eine wiederholende Beschreibung verzichtet. Bei diesem Ausführungsbeispiel sind die Schneidköpfe 41, 42 je an einer Hohlwelle 100, 100' befestigt, die in entsprechenden Lagern 101, 101' an den Schlitten 32, 32' sowohl drehbar als auch axial verschiebbar gelagert sind. Da beide Schneidköpfe 41, 42 gleich ausgebildet sind, wird nachfolgend nur der Schneidkopf 41 beschrieben und die entsprechenden, zum Schneidkopf 42 gehörenden Teile mit den gleichen, jedoch mit einem Strich indexierten Hinweisziffern versehen.

Die Welle 100 ist über einen Keilriementrieb 102 von einem durch den PC 10 gesteuerten Antriebsmotor 99 um die gemeinsame Drehachse 9 dreh- bzw. schwenkbar. Weiter weist die Hohlwelle 100 eine fest sitzende, ringförmige Kulisse 103 auf, in deren Ringnut ein Schwenkhebel 104 greift, der mittels eines hydraulisch oder pneumatisch betätigbaren Kolbens 105 verschwenkbar ist. Mittels des Kolbens 105 kann die Hohlwelle 100 aus der in Fig. 6 gezeigten ausgerückten Stellung in die in Fig. 7 gezeigte Zwischenstellung verschoben und damit der Abstand der Schneidmesser 43, 44 von zum Beispiel 11 mm auf 1 mm verkleinert werden. In der Zwischenstellung (Fig. 7) liegen die einander zugewandten Seiten der Schneidmesser 43, 44 (das heisst, die Ebenen ihrer Schneidkanten) in der Schneidebene 54.

Die Schneidmesser 43, 44 sitzen drehfest auf parallelen, zur Horizontalen geneigten Messerwellen 53. Drehfest auf jede Messerwelle 53 sitzt weiter ein Kegelrad 106. Die Messerwelle 53 ist frei drehbar in einem Lagerblock 107 gelagert. Der Lagerblock 107 ist auf gegenüberliegenden Seiten mit je einer Führungsrippe 108 versehen, die in zur Schneidebene 54 parallelen Führungsschlitzen 109 einer im Querschnitt U-förmigen Lagerklaue 110 gelagert sind. Die Lagerklaue 110 ist fest mit der Hohlwelle 100 verbunden und dreht sich mit dieser um die den Schneidköpfen 41, 42 gemeinsame Achse 9.

Der Lagerblock 107 ist fest mit dem Ende einer Schubstange 111 und die Schubstange 111 fest mit dem Kolben 112 einer am Schlitten 32 gelagerten Zylinder-Kolbeneinheit verbunden. Wird der Kolben 112 von einem Druckmedium beaufschlagt, verschiebt er die Schubstange 111 axial hin und her. Die Schubstange 111 erstreckt sich im wesentlichen axial und mit Spiel durch eine zweite Hohlwelle 113, die dreh- und axial verschiebbar in der ersten Hohlwelle 100 gelagert ist. Ein Motor 45 treibt die zweite Hohlwelle 113 über einen Riementrieb 116 und mit ihr ein am unteren Ende befestigtes Kegelrad 117. Dieses treibt das Kegelrad 106 und das Schneidmesser 43 an. Wie aus Fig. 9 ersichtlich, ist die Schubstange 111 am oberen Ende mit einem ringförmigen, eine Ringnut bildenden Kragen 114 versehen, in die die Hohlwelle 113 mit einer Ringrippe 115 greift. Die Hohlwelle 113 ist hierdurch um die stillstehende Schubstange 111 drehbar.

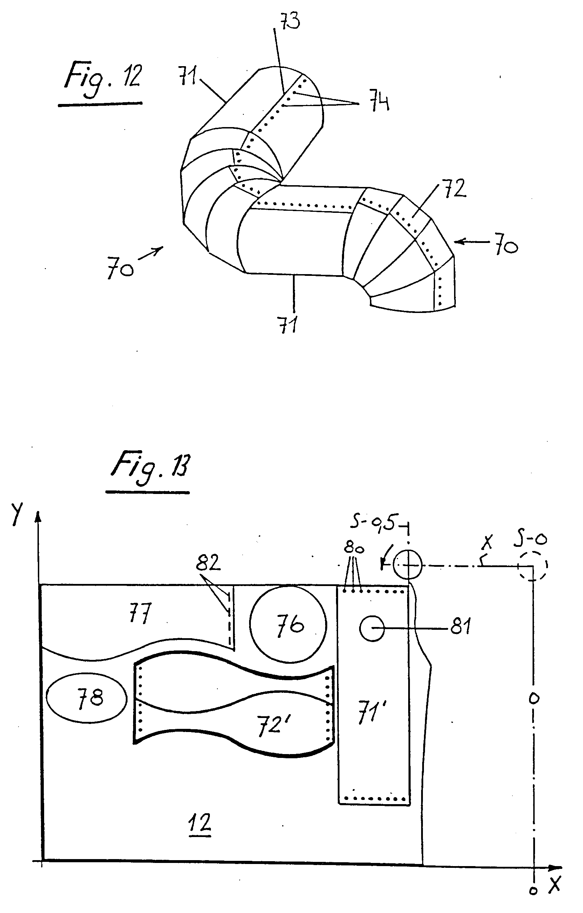

Sind die Schneidmesser 43, 44 aus der in Fig. 6 gezeigten ausgerückten Stellung in die Arbeitsstellung einzurücken, wird wie schon erwähnt vorerst der Kolben 105 betätigt und die Hohlwelle 100 mit der Lagerklaue 110 in die in Fig. 7 gezeigte Zwischenstellung bewegt, wobei die Lagerklaue 110 das Kegelrad 117 mit der zweiten Hohlwelle 113 und der Schubstange 111 mitnimmt. In dieser Zwischenstellung liegen die einander zugewandten ebenen Flächen der Schneidmesser 43, 44 (bzw. deren Schneidkanten) in der Schneidebene 54, wobei sie einen Spalt von beispielsweise 1 mm frei lassen. Durch den Spalt kann nun ein zu beschneidendes Blech eingeschoben werden. Liegt jene Stelle des Bleches an der die Schneidoperation beginnen soll zwischen den Schneidmessern 43, 44, werden die Schneidmesser 43, 44 in einem zweiten Schritt vollständig eingerückt (Fig. 8). Hierzu wird mittels des Kolbens 112 die Schubstange 111 nach unten geschoben. Durch die zur Schneidebene 54 parallele Führung der Lagerblöcke 107 verschieben sich die Schneidmesser 43, 44 in der Schneidebene 54 bis zur gegenseitigen Berührung. Im Moment der gegenseitigen Berührung beginnt die Schneidoperation. Das Ausrücken der Schneidmesser erfolgt in umgekehrter Reihenfolge der vorbeschriebenen Schritte. Zuerst werden die Schneidmesser 43, 44 in der Schneidebene 54 (also schräg zur Senkrechten) mittels des Kolbens 112 getrennt und im nächsten Schritt durch den Kolben 105 in Richtung der Senkrechten vollständig ausgerückt.

Anstelle der beschriebenen Schneidmesser 43, 44 können auch nicht dargestellte in Richtung ihrer Vertikalachse gegeneinander bewegbare Scherschnittmesser verwendet werden, von denen das eine von einem oszillierenden Antrieb in Richtung der Vertikalachse angetrieben ist. Die Scherschnittmesser sind dabei ebenfalls im entsprechenden Schlitten 32, 32' um die Vertikalachse dreh- und antreibbar gelagert und vom Rechner 10 gesteuert, so dass ihre Schneiden tangential den auszuschneidenden Konturen folgen können. Diese nicht dargestellte Ausführungsform ist konstruktiv einfacher und daher preisgünstiger aber mit dem Nachteil behaftet, dass der Schneidvorgang lärmintensiver erfolgt.

Anstelle der in Fig. 1 gezeigten Blechtransporteinrichtung 11 können an den Stützen 4, 4' je ein horizontaler Träger (nicht dargestellt) befestigt sein. An beiden Enden dieser Träger ist je eine Vorschubeinrichtung angeordnet, welche gleich ausgebildet sind und von denen anhand von Fig. 10 und 11 nur die vordere beschrieben wird. Die Vorschubgeschwindigkeit weist eine Gewindespindel 120 mit zwei gegenläufigen Gewindehälften auf, die drehbar in den beiden Trägern gelagert und die über einen Riementrieb 121 durch einen nicht dargestellten Verstellmotor drehbar sind. Auf die beiden Enden der Gewindespindel 120 sind symmetrisch zwei Konsolen 122 aufgeschraubt, welche zwei mittels eines Federpaketes 123 gegeneinander pressbare Lager 124 und 125 tragen. In den Lagern sind Wellen 126 drehbar gelagert, auf deren inneres Ende je ein Keilriemenrad aufgesetzt ist. Um die Keilriemenräder sind paarweise zwei Keilriemen 128 geführt, deren aneinander liegende Trums mit gleichem Drehsinn umlaufen. Durch ein Drehen der Gewindespindel 120 kann der gegenseitige Abstand der Keilriemenpaare 128 verstellt und der Breite einer zu bearbeitenden Blechtafel 12 angepasst werden. In den Konsolen 122 ist weiter eine Antriebswelle 130 gelagert, die von einem Motor 16 antreibbar ist, und die über Riementriebe 131, 132 die Keilriemenpaare 128 beider Vorschubeinrichtungen synchron antreibt.

Die Figur 12 zeigt ein Beispiel für eine Isolationsverschalung aus Dünnblech, mit zwei Bögen 70 und zylindrischen Zwischenstücken 71. Die Bogen 70 sind zusammengesetzt aus je vier Segmentabschnitten 72. Jeder Abschnitt ist an der Stossstelle 73 beziehungsweise im überlappten Bereich durch Nieten 74 geschlossen.

In der Figur 13 sind verschiedene Blechformen auf einer Blechtafel 12 aufgezeichnet, wie sie typisch sind für die Herstellung von Isolationsrohren gemäss Figur 12. Mit 71' ist die Blechform für ein zylindrisches Zwischenstück 71, mit 72' eine solche für ein Segmentabschnitt 72, mit 76 ein kreisförmiges Abschlussdeckel, mit 77 ein Segmentübergangsstück zu dem zylindrischen Zwischstück 71 und mit 78 eine ovale Form dargestellt. Mit der Figur 13 soll zum Ausdruck gebracht werden, dass bei optimaler Anordnung der Einzelformen auf der Blechtafel 12 sehr wenig Verschnitt entsteht.

Weiterhin zeigt die Figur 13 bei den Einzelformen zusätzliche Bearbeitungen, insbesondere zum Beispiel Nietlöcher 80, Schlitze 82 und in der Form 71 eine kreisförmige Ausnehmung 81. Die letzgenannten drei Arbeiten können überraschend einfach mit einer zusätzlichen Bearbeitungseinheit 21 in Form eines Feinstanzwerkzeuges 93 wie sie in der Figur 2 eingezeichnet ist ausgeführt werden. Dabei ist eine Matrize 91 direkt mit dem unteren Schlitten 32' verbunden und ein Stempel 92 mit seinem Betätigungsmechanismus 93 und dessen Antrieb 94 an dem oberen Schlitten 32 fixiert. Das Feinstanzwerkzeug 21 bewegt sich synchron mit dem Werkzeugoberteil 5 und die Matrize 91 bewegt sich synchron mit dem Werkzeugunterteil 6. Es ist nun möglich in dem Bereich des Feinstanzwerkzeuges 21 dieses mit einem Sensor auszurüsten und zur exakten Einstellung periodisch die Arbeitsposition des Werkzeugoberteils 5 sowie des Werkzeugunterteils 6 anzugleichen, da gerade das Stanzwerkzeug in dieser Beziehung die höchsten Anforderungen stellt. Die Matrize 91 und der Stempel 92 können ebenfalls um ihre gemeinsame Vertikalachse (wie die Werkzeugteile 5 und 6) drehbar am zugeordneten Schlitten 32, 32' gelagert und von (den Motoren 45, 45' entsprechenden) nicht dargestellten Motoren angetrieben und vom Rechner 10 gesteuert sein.

Zweckmässigerweise wird für das Ausschneiden einer bestimmten Formgruppe wie in Figur 13 dargestellt ist, zum Beispiel bei der Form 71, zuerst die Innenbearbeitung, also die Nietlöchter 80, sowie die Ausnehmung 81 angebracht, und erst danach die äussere Form ausgeschnitten. Beide Arbeitseinsätze lassen sich über die entsprechenden Programme sowohl zeitlich wie für den Einzelsteuerbefehl leicht kombinieren. Etliche Grundoperationen müssen dabei identisch ausgeführt werden, wie bei der Lösung gemäss des Schweizer Gesuches Nr. 3260/92-7 worauf Bezug genommen wird. Die Blechtafel 12 muss durch eine Blechtransporteinrichtung 11 (siehe Figur 1), welche zum Beispiel eine an sich bekannte Magnetklemmvorrichtung aufweisen kann, in Richtung der Y-Achse für wiederholte Schneidvorgänge vorwärts und rückwärts bewegt werden. Werkzeugoberteile 5 sowie Werkzeugunterteile 6 werden längs der X-Achse, quer zu der Y-Achse verschoben. Beide Werkzeugteile weisen koordinierte Verdrehantriebe (Fahnen 8, 8' in Figur 1) auf, so dass sie um ihre eigene Achse 9 in verschiedene Schneidrichtungen gedreht beziehungsweise verschwenkt werden können. Dieses an sich bekannte Bewegungsspiel von Blechtafel 12 und Schneidmesser 43/44 ist deshalb wichtig, weil dadurch die Schneidwerkzeuge in die, für krumme Schnitte stets wechselnde, optimale Schneidstellung bringbar sind. Der Schneidkopf beginnt stets seine erste Bewegung zumindest für eine Serie von Formen aus einer Blechtafel bevorzugt von einer Eich-Stellung S - 0 und fährt gemäss Programm zum Beispiel auf eine Stellung S - 0,5 und führt dann, wenn erforderlich eine Drehbewegung gemäss Pfeil aus und stellt sich dann in die optimale Schneidrichtung ein. Wenn aber die auszuschneidende Kontur vollständig gekrümmt ist, muss, koordiniert mit der Vorschubbewegung der Blechtafel 12, der Schneidkopf ständig in die jeweils optimale Schneideinrichtung für die je spezielle Form einstellen.

Um den kreisrunden Abschlussdeckel 76 oder das Ovalblech 78 auszuschneiden führt das Programm die beiden Werkzeugteile 5 oder 6 auf einen Punkt der Umfangslinie des Abschlussdeckels 76 oder des Ovalblechs 78 und führt dann die Werkzeuge entlang der Umfangslinie zum Ausgangspunkt zurück. Werden zu Beginn die beiden Werkzeugteile 5 und 6 zu dem Ausgangspunkt gebracht, sind die Messer 43 und 44 zur senkrechten Distanzierung in der Schneidebene voneinander wegbewegt (Figur 3) und werden erst nach Erreichen des Ausgangspunktes in den in Figur 4 gezeigten Arbeitseingriff gebracht. Nach dem Ausschneiden des Abschlussdeckels 76 oder des Ovalblechs 78 können die Messer 43 und 44 erneut in der Schneidebene voneinander in senkrechter Richtung distanziert und die Blechtafel 12 mit der Blechtransporteinrichtung 11 aus dem Wirkbereich der Werkzeugteile 5, 6 bewegt werden.

## Patentansprüche

1. Vorrichtung zur Dünnblech-Bearbeitung insbesondere zum Beispiel für das rechnergesteuerte Formschneiden von Dünnblechen (12), mit einem Werkzeugoberteil (5) und einem Werkzeugunterteil (6) sowie einer steuerbaren Blechtransporteinrichtung (11),
**dadurch gekennzeichnet,**
dass das Werkzeugoberteil (5) und das Werkzeugunterteil (6) je an übereinander angeordneten Führungen (2, 3) über Antriebsmittel (45, 45') koordiniert horizontal verfahrbar und zusätzlich vertikal zueinander gesteuert verstellbar sowie mittels eines Verdrehantriebs um die Z-Achse des Koordinatensystems verdrehbar sind, und dass die beiden Werkzeugteile (5, 6) je eigene motorissche Antriebsmittel (45, 45') und steuerbare Verstellmittel (60 bis 62; 60' bis 62') für die vertikale Zu- beziehungsweise Wegstellbarkeit der Schneidwerkzeuge (43, 44) aufweisen.

2. Vorrichtung nach Anspruch 1,
**dadurch gekennzeichnet,**
dass die Führungen (2, 3) vorzugsweise als versteifende Führungswangen als Teil eines sich im wesentlichen senkrecht erstreckenden Portalrahmens (1) ausgebildet sind.

3. Vorrichtung nach Anspruch 2,
**dadurch gekennzeichnet,**
dass an den Führungen (2, 3) je ein Schlitten (32, 32') verfahrbar ist, die für eine mittlere Blechdurchführöffnung im Abstand übereinander angeordnet sind, und je ein Werkzeugteil (5, 6) tragen und dass für die horizontal koordinierte Verfahrbarkeit zum Beispiel hydraulische oder pneumatische und/oder mechanische, elektrische Mittel vorhanden sind.

4. Vorrichtung nach einem der Ansprüche 1 bis 3,
**dadurch gekennzeichnet,**
dass die beiden Werkzeugteile (5, 6) je als eine eigenständige Baugruppe über äussere und innere Führungsschienen (35, 37) an Führungswangen (2, 3) geführt sind.

5. Vorrichtung nach einem der Ansprüche 1 bis 4,
**dadurch gekennzeichnet,**
dass die Verstellmittel vorzugsweise einen, über einen Exzenter (61, 61') verstellbaren (62, 62') Verschwenkhebel aufweisen.

6. Vorrichtung nach Anspruch 5,
**dadurch gekennzeichnet,**
dass die Verstellmittel (60 bis 62; 60' bis 62') sowohl motorische Mittel zum Beispiel als steuerbare Luftdrehzylinder (60, 60' wie auch Handverstellmittel vorzugsweise mit Abstandsanzeige der Schneidewerkzeuge aufweisen.

7. Vorrichtung nach einem der Ansprüche 1 bis 6,
**dadurch gekennzeichnet,**
dass die Schneidwerkzeuge (43, 44) je ein rotierendes Schneidmesser aufweisen, von denen wenigstens eines angetrieben ist, und dass vorzugsweise an den Schlitten (32) je Teile (91, 92) einer weiteren Dünnblech-Bearbeitungseinheit (21) zum Beispiel einer Feinstanzeinheit befestigt ist.

8. Vorrichtung nach einem der Ansprüche 1 bis 7,
**dadurch gekennzeichnet**,
dass zur Hemmung der Werkzeugteile (5, 6) Rechnermittel für die Steuerung aller Bewegungen vorhanden sind, so dass zum Beispiel nacheinaner das Blech auf eine Form geschnitten und erforderliche Nietlöcher unmittelbar danach oder davor herstellbar sind.

9. Vorrichtung nach einem der Ansprüche 3 bis 8,
**dadurch gekennzeichnet**,
dass der in einer vertikalen Ebene verlaufende Portalrahmen (1) nach unten, vorzugsweise beidseits, auf quer dazu vorstehenden Schenkeln (7) auf dem Boden abgestützt ist.

10. Vorrichtung nach einem der Ansprüche 3 bis 9,
**dadurch gekennzeichnet**,
dass der Portalrahmen (1) im Bereich der Blechdurchführöffnung beidseits je eine Blechauflagefläche (30, 31; 124, 125) bildet, die wenigstens an einer Seite durch einen antreibbaren und rechtwinklig zur Ebene des Portalrahmens (1) verfahrbare Blechtransporteinrichtung (11) begrenzt ist.

11. Vorrichtung nach Anspruch 1,
**dadurch gekennzeichnet**,
dass die Schneidwerkzeuge (43, 44) je ein rotierend angetriebenes, in der Schneidebene liegendes Schneidmesser aufweisen, welche in der Schneidebene (54) vertikal zueinander verstellbar sind.

12. Vorrichtung nach einem der Ansprüche 1 bis 5,
**dadurch gekennzeichnet**,
dass wenigstens eines der Werkzeuge steuerbare Verstellmittel (100, 103 bis 105; 107 bis 115) für die vertikale Zu- bzw. Wegstellbarkeit der Schneidwerkzeuge (43, 44) aufweist, welche Verstellmittel (100, 103 bis 105; 107 bis 115) das mindestens eine ausgerückte Schneidwerkzeug (43, 44) in zwei Schritten zustellt, dass im ersten Schritt das Schneidwerkzeug (43, 44) mit einem Teil der Verstellmittel (100, 103 bis 105) in Richtung der Vertikalen (9) in eine Zwischenstellung (Fig. 7) gebracht wird, in welcher die Schneidkanten der Schneidwerkzeuge (43, 44) in der zur Vertikalen (9) geneigten Schneidebene (54) liegen und dass im zweiten Schritt mit dem anderen Teil der Verstellmittel (107 bis 115) das mindestens eine Schneidwerkzeug (43, 44) in der Schneidebene (53) in die Arbeitsstellung bewegt wird.

13. Vorrichtung nach Anspruch 12,
**dadurch gekennzeichnet**,
dass das Schneidwerkzeug (43, 44) verschiebbar in einer zur Schneidebene (54) parallelen Führung (109) einer in der vertikalen (9) beweglichen Lagerklaue (110) gelagert ist.

14. Vorrichtung nach Anspruch 13,
**dadurch gekennzeichnet**,
dass das Schneidwerkzeug (43, 44) drehfest mit einem Kegelzahnrad (106) verbunden ist, welches mit einem durch die Verstellmittel (100, 103 bis 105; 107 bis 115) in der Vertikalen (9) beweglichen, antreibbaren Kegelzahnrad (117) kämmt.

15. Vorrichtung nach Anspruch 10,
**dadurch gekennzeichnet**,
dass vor und hinter dem Portalrahmen (1) je eine Blechtransporteinrichtung (11) vorhanden und dass der Abstand der einander mit Bezug auf die Blechvorschubrichtung gegenüberliegenden Blechtransporteinrichtungen (11) einstellbar ist.

16. Vorrichtung nach Anspruch 10 oder 15,
**dadurch gekennzeichnet**,
dass jede Blechtransporteinrichtung (11) zwei gegensinnig drehende, endlose Transportbänder (125, 126) aufweist, deren gleichgerichtet bewegte Trums mit einstellbarer Federkraft (123) aneinander liegen.

17. Vorrichtung nach Anspruch 15 oder 16,
**dadurch gekennzeichnet**,
dass die sich mit Bezug auf die Blechvorschubrichtung gegenüberliegenden Transporteinrichtungen (11) symmetrisch verstellbar sind.

18. Vorrichtung nach einem der Ansprüche 15 bis 17,
**dadurch gekennzeichnet**,
dass die Blechtransporteinrichtungen (11) simultan antreibbar sind.

19. Vorrichtung nach einem der Ansprüche 15 bis 18,
**dadurch gekennzeichnet**,
dass die Blechtransporteinrichtungen (11) simultan verstellbar sind.

20. Verfahren zur Dünnblechbearbeitung mit einer programmgesteuerten Formschneideinrichtung bestehend aus einem Werkzeugoberteil sowie einem Werkzeugunterteil und einer steuerbaren Blechtransporteinrichtung,
**dadurch gekennzeichnet**, dass
a) das Blech in einer Horizontalebene senkrecht zu der Verfahrrichtung der Werkzeugteile unabhängig von diesen nach einem vorgegebenen Programm in die Bearbeitungsstartlage bewegt wird,
b) das Werkzeugoberteil und das Werkzeugunterteil an je eigenen übereinander angeordneten Führungen in auseinandergerückter Stellung koordiniert in die Arbeitsposition verfahren und in eine Arbeitsbeginnstellaung gedreht werden und
c) das Werkzeugoberteil und Werkzeugunterteil in Betrieb gesetzt und für den Arbeitseinsatz vertikal zueinander in Arbeitseingriff gebracht und,
d) durch koordinierte Bewegung von Blech und Werkzeug die Form geschnitten und danach das Werkzeugoberteil und Werkzeugunterteil wieder auseinander gerückt werden.

21. Verfahren nach Anspruch 20,
**dadurch gekennzeichnet**,
dass durch zusätzliches, gegebenenfalls wiederholtes Bewegen des Bleches in entsprechende zweite Bearbeitungsstartlagen mit einer zweiten, mit dem Werkzeugoberteil beziehungsweise dem Werkzeugunterteil je starr verbundenen Bearbeitungseinrichtung, zum Beispiel einem Feinstanzwerkzeug, durch Verfahren in zweite Arbeitspositionen weitere Bearbeitungen mit unveränderter Einrichtung unter Ausnutzung eines jeweiligen Programmteiles für die Einzelform, vor oder nachher durchgeführt werden.

## Claims

1. Apparatus for machining thin metal sheets, in particular, for example, for the computer-controlled shape cutting of thin metal sheets (12), having a top tool part (5) and a bottom tool part (6) as well as a controllable sheet-transport device (11), characterized in that the top tool part (5) and the bottom tool part (6), each on guides (2, 3) arranged one above the other, are horizontally traversable in a coordinated manner and are additionally vertically adjustable to one another in a controlled manner via drive means (45, 45') and are also rotatable about the Z-axis of the coordinate system by means of a rotary drive, and in that the two tool parts (5, 6) each have separate motor-operated drive means (45, 45') and controllable adjusting means (60 to 62; 60' to 62') for the vertical infeed or path adjustability of the cutting tools (43, 44).

2. Apparatus according to Claim 1, characterized in that the guides (2, 3) are preferably designed as stiffening guide cheeks as part of a portal frame (1) extending essentially perpendicularly.

3. Apparatus according to Claim 2, characterized in that a slide (32, 32') is traversable on each of the guides (2, 3), which slides (32, 32') are arranged one above the other at a distance apart for a central sheet feedthrough opening and each carry a tool part (5, 6), and in that there are, for example, hydraulic or pneumatic and/or mechanical and/or electrical means for the horizontally coordinated traversability.

4. Apparatus according to one of Claims 1 to 3, characterized in that the two tool parts (5, 6) are each guided as an independent subassembly on guide cheeks (2, 3) via outer and inner guide rails (35, 37).

5. Apparatus according to one of Claims 1 to 4, characterized in that the adjusting means preferably have a pivoted lever adjustable (62, 62') via an eccentric (61, 61').

6. Apparatus according to Claim 5, characterized in that the adjusting means (60 to 62; 60' to 62') have both motor-operated means, for example as controllable rotary air cylinders (60, 60'), and manual adjusting means, preferably with indication of the distance between the cutting tools.

7. Apparatus according to one of Claims 1 to 6, characterized in that the cutting tools (43, 44) each have a rotating cutting blade, of which at least one is driven, and in that parts (91, 92) of a further machining unit (21) for thin metal sheet, for example of a precision punching unit, are provided on the respective slides (32, 32').

8. Apparatus according to one of Claims 1 to 7, characterized in that, to arrest the tool parts (5, 6), there are computer means for the control of all the movements, so that, for example, in successive operations, the sheet is cut to a shape and requisite rivet holes can be made immediately afterwards or beforehand.

9. Apparatus according to one of Claims 3 to 8, characterized in that the portal frame (1) running in a vertical plane is supported on the floor at the bottom, preferably on both sides, on legs (7) projecting transversely thereto.

10. Apparatus according to one of Claims 3 to 9, characterized in that the portal frame (1) forms a sheet-supporting surface (30, 31; 124, 125) on each of the two sides in the region of the sheet feedthrough opening, the sheet-supporting surface (30, 31; 124, 125) being defined at least on one side by a drivable sheet-transport device (11) traversable at right angles to the plane of the portal frame (1).

11. Apparatus according to Claim 1, characterized in that the cutting tools (43, 44) each have a cutting blade, said cutting blades being driven in a rotary manner, lying in the cutting plane and being vertically adjustable relative to one another in the cutting plane (54).

12. Apparatus according to one of Claims 1 to 5, characterized in that at least one of the tools has controllable adjusting means (100, 103 to 105; 107 to 115) for the vertical infeed or path adjustability of the cutting tools (43, 44), which adjusting means (100, 103 to 105; 107 to 115) feeds the at least one disengaged cutting tool (43, 44) in in two steps, in that, in the first step, the cutting tool (43, 44) is brought by one part of the adjusting means (100, 103 to 105) in the direction of the vertical (9) into an intermediate position (Fig. 7), in which the cutting edges of the cutting tools (43, 44) lie in the cutting plane (54) inclined to the vertical (9), and in that, in the second step, the at least one cutting tool (43, 44) is moved in the cutting plane (53) into the working position by the other part of the adjusting means (107 to 115).

13. Apparatus according to Claim 12, characterized in that the cutting tool (43, 44) is mounted so as to be displaceable in a guide (109) of a bearing claw (110) movable in the vertical (9), the guide (109) being parallel to the cutting plane (54).

14. Apparatus according to Claim 13, characterized in that the cutting tool (43, 44) is connected in a rotationally fixed manner to a bevel gear (106), which meshes with a drivable bevel gear (117) movable in the vertical (9) by the adjusting means (100, 103 to 105; 107 to 115).

15. Apparatus according to Claim 10, characterized in that there is one sheet-transport device (11) each in front of and behind the portal frame (1), and in that the distance between the sheet-transport devices (11), which are opposite one another relative to the sheet-feed direction, is adjustable.

16. Apparatus according to Claim 10 or 15, characterized in that each sheet-transport device (11) has two endless transport belts (128), which rotate in opposite directions and the unidirectionally moving strands of which bear against one another with adjustable spring force (123).

17. Apparatus according to Claim 15 or 16, characterized in that the transport devices (11), which are opposite one another relative to the sheet-feed direction, are symmetrically adjustable.

18. Apparatus according to one of Claims 15 to 17, characterized in that the sheet-transport devices (11) can be driven simultaneously.

19. Apparatus according to one of Claims 15 to 18, characterized in that the sheet-transport devices (11) are adjustable simultaneously.

20. Method of machining thin metal sheets with a program-controlled shape-cutting apparatus, consisting of a top tool part as well as a bottom tool part and a controllable sheet-transport device, characterized in that
a) the sheet is moved into the machining start position in a horizontal plane perpendicularly to the traverse direction of the tool parts independently of the latter according to a preset progam,
b) the top tool part and the bottom tool part, each on separate guides arranged one above the other, are traversed in a position disengaged from one another into the working position in a coordinated manner and are rotated into a work start position, and
c) the top tool part and the bottom tool part are put into operation and are brought into working engagement for working use vertically one above the other, and
d) the shape is cut by coordinated movement of sheet and tool and then the top tool part and bottom tool part are disengaged from one another again.

21. Method according to Claim 20, characterized in that, by additional, if need be repeated, movement of the sheet into corresponding second machining start positions, with a second machining device, for example a precision punching tool, which is rigidly connected to the top tool part and the bottom tool part respectively, further machining operations are carried out beforehand or afterwards with an unchanged device, while utilizing a respective part of the program for the individual shape, by traversing into second working positions.

## Revendications

1. Dispositif pour l'usinage de tôles minces, en particulier par exemple pour le découpage de formes de tôles minces (12) commandé par ordinateur, avec une partie supérieure de l'outil (5) et une partie inférieure de l'outil (6) ainsi qu'un dispositif de transport des tôles commandable (11), caractérisé en ce que la partie supérieure de l'outil (5) et la partie inférieure de l'outil (6) peuvent chacune être déplacées horizontalement de manière coordonnée par des moyens d'entraînement (45, 45') sur des guides disposés l'un au-dessus de l'autre (2, 3), peuvent de plus être ajustées verticalement l'une par rapport à l'autre de manière commandée, et peuvent tourner autour de l'axe Z du système de coordonnées par un entraînement rotatif, et en ce que les deux parties d'outils (5, 6) présentent chacune leur propre moyen d'entraînement motorisé (45, 45') et moyen d'ajustage commandable (60 à 62; 60' à 62') pour l'avance ou le retrait vertical des outils de coupe (43, 44).

2. Dispositif selon la revendication 1, caractérisé en ce que les guides (2, 3) sont configurés de préférence en tant que parois de guidage de renfort faisant partie d'un cadre de portique (1) s'étendant essentiellement verticalement.

3. Dispositif selon la revendication 2, caractérisé en ce que sur les guides (2, 3) peuvent se déplacer des glissoirs respectifs (32, 32'), qui sont disposés à une certaine distance l'un au-dessus de l'autre pour une ouverture de passage moyenne des tôles, et qui portent chacun une partie d'outil (5, 6) et en ce que des moyens par exemple hydrauliques ou pneumatiques et/ou mécaniques, électriques sont prévus pour le déplacement horizontal coordonné.

4. Dispositif selon l'une quelconque des revendications 1 à 3, caractérisé en ce que les deux parties d'outil (5, 6) sont guidées respectivement en tant que module autonome sur des rails de guidage externe et interne (35, 37) sur des parois de guidage (2, 3).

5. Dispositif selon l'une quelconque des revendications 1 à 4, caractérisé en ce que les moyens d'ajustage présentent de préférence un levier basculant ajustable (62, 62') sur un excentrique (61, 61').

6. Dispositif selon la revendication 5, caractérisé en ce que les moyens d'ajustage (60 à 62; 60' à 62') présentent aussi bien des moyens motorisés par exemple sous forme de cylindre de distribution à air (60, 60') commandable que des moyens d'ajustage manuels de préférence avec indication de l'écart entre les outils de coupe.

7. Dispositif selon l'une quelconque des revendications 1 à 6, caractérisé en ce que les outils de coupe (43, 44) présentent chacun une lame de coupe rotative, dont au moins une est entraînée, et en ce que de préférence des pièces (91, 92) d'une autre unité d'usinage de tôles minces (21), par exemple d'une unité de découpage de précision, sont fixées respectivement sur les glissoirs (32).

8. Dispositif selon l'une quelconque des revendications 1 à 7, caractérisé en ce que pour l'arrêt des parties de l'outil (5, 6), des moyens informatiques pour la commande de tous les mouvements sont prévus, de sorte que par exemple en succession la tôle soit coupée suivant une forme particulière et que des trous de rivet nécessaires puissent être réalisés immédiatement après ou avant.

9. Dispositif selon l'une quelconque des revendications 3 à 8, caractérisé en ce que le cadre de portique (1) s'étendant dans un plan vertical est supporté au sol par le bas, de préférence des deux côtés, sur des branches (7) saillant perpendiculairement à celui-ci.

10. Dispositif selon l'une quelconque des revendications 3 à 9, caractérisé en ce que le cadre de portique (1) forme, dans la zone de l'ouverture de passage des tôles, de part et d'autre une surface respective de support des tôles (30, 31; 124, 125), qui est limitée au moins d'un côté par un dispositif de transport de tôles (11) pouvant être entraîné et déplacé à angle droit par rapport au plan du cadre de portique (1).

11. Dispositif selon la revendication 1, caractérisé en ce que les outils de coupe (43, 44) présentent chacun une lame de coupe entraînée en rotation et se trouvant dans le plan de coupe, ces lames de coupe étant ajustables l'une par rapport à l'autre verticalement dans le plan de coupe (54).

12. Dispositif selon l'une quelconque des revendications 1 à 5, caractérisé en ce qu'au moins un des outils présente des moyens commandables (100, 103 à 105; 107 à 115) pour approcher ou écarter verticalement les outils de coupe (43, 44), lesquels moyens d'ajustage (100, 103 à 105; 107 à 115) ajustent au moins un outil de coupe désengagé (43, 44) en deux étapes, en ce que dans la première étape, l'outil de coupe (43, 44) est amené avec une partie des moyens d'ajustage (100, 103 à 105) dans la direction de la verticale (9) dans une position intermédiaire (figure 7), dans laquelle les arêtes de coupe des outils de coupe (43, 44) se trouvent dans le plan de coupe (54) incliné par rapport à la verticale et en ce que dans la deuxième étape, avec l'autre partie des moyens d'ajustage (107 à 115) l'au moins un outil de coupe (43, 44) est déplacé dans le plan de coupe (53) dans la position de travail.

13. Dispositif selon la revendication 12, caractérisé en ce que l'outil de coupe (43, 44) est monté de manière à pouvoir être déplacé dans un guide (109) parallèle au plan de coupe (54) d'une griffe de support (110) déplaçable verticalement (9).

14. Dispositif selon la revendication 13, caractérisé en ce que l'outil de coupe (43, 44) est raccordé fixe en rotation à une roue dentée conique (106), qui s'engrène avec une roue dentée conique (117) entraînable, déplaçable verticalement (9) par les moyens d'ajustage (100, 103 à 105; 107 à 115).

15. Dispositif selon la revendication 10, caractérisé en ce que devant et derrière le cadre de portique (1) est disposé un dispositif de transport des tôles respectif (11) et en ce que l'écart des dispositifs de transport des tôles (11) opposés l'un à l'autre par rapport à la direction d'avance des tôles est ajustable.

16. Dispositif selon la revendication 10 à 15, caractérisé en ce que chaque dispositif de transport de tôles (11) présente deux bandes de transport sans fin (125, 126) tournant en sens contraire, dont les longueurs déplacées dans le même sens reposent l'une contre l'autre par la force réglable d'un ressort (123).

17. Dispositif selon la revendication 15 ou 16, caractérisé en ce que les dispositifs de transport (11) en regard par rapport à la direction d'avance des tôles sont ajustables de manière symétrique.

18. Dispositif selon l'une quelconque des revendications 15 à 17, caractérisé en ce que les dispositifs de transport des tôles (11) peuvent être entraînés simultanément.

19. Dispositif selon l'une quelconque des revendications 15 à 18, caractérisé en ce que les dispositifs de transport des tôles (11) peuvent être déplacés simultanément.

20. Procédé pour l'usinage de tôles minces avec un dispositif de découpe de formes programmé se composant d'une partie supérieure d'un outil ainsi que d'une parie inférieure d'un outil et d'un dispositif de transport de tôles commandable, caractérisé en ce que
a) la tôle est déplacée dans un plan horizontal perpendiculairement à la direction de déplacement des parties d'outil indépendamment suivant un programme pré-établi dans la position de début d'usinage,
b) la partie supérieure de l'outil et la partie inférieure de l'outil se déplacent de manière coordonnée dans la position de travail sur des guides respectifs disposés l'un au-dessus de l'autre dans la position désengagée l'une de l'autre, et sont tournées dans une position de début d'usinage et
c) la partie supérieure de l'outil et la partie inférieure de l'outil sont mises en service et sont amenées en contact de travail verticalement l'une vers l'autre pour le commencement de l'usinage et
d) la forme est découpée par le mouvement coordonné de la tôle et de l'outil et ensuite la partie supérieure de l'outil et la partie inférieure de l'outil sont à nouveau désengagées l'une de l'autre.

21. Procédé selon la revendication 20, caractérisé en ce que, par un déplacement supplémentaire, éventuellement répété de la tôle dans des deuxièmes positions de début d'usinage correspondantes, avec un deuxième dispositif d'usinage relié rigidement à la partie supérieure de l'outil, respectivement à la partie inférieure de l'outil, par exemple un outil de découpage de précision, par déplacement dans des deuxièmes positions, d'autres usinages sont réalisés avant ou après avec un dispositif non modifié en utilisant une partie respective du programme pour la forme individuelle.
